# EUROPÄISCHE PATENTSCHRIFT

(11) **EP 0 472 002 B1**
(45) Veröffentlichungstag und Bekanntmachung des Hinweises auf die Patenterteilung: **05.07.1995**
(21) Anmeldenummer: 91112563.1
(22) Anmeldetag: 26.07.1991
(51) Int. Cl.: F16L 37/08, B26D 7/00

(54) **Rohrteil mit Verbindungsorganen**
Pipe section with connecting elements
Elément de tuyau comportant des organes de liaison

(30) Priorität: 20.08.1990 CH 2691/90
(43) Veröffentlichungstag der Anmeldung: 26.02.1992
(73) Patentinhaber: Jansen AG, CH-9463 Oberriet (CH)
(72) Erfinder: Hunziker, Harro, CH-9463 Oberriet (CH)
(74) Vertreter: Blum, Rudolf Emil Ernst

(56) Entgegenhaltungen:
- CH-A- 647 307
- DE-A- 2 856 520

## Beschreibung

Die Erfindung betrifft ein Rohr gemäss dem Oberbegriff des ersten Patentanspruchs sowie ein Verfahren zu dessen Herstellung. Solche Rohre finden in vielen technischen Bereichen Verwendung. Ihre gegenseitige Verbindung erfolgt herkömmlicherweise mittels Ueberwurfmuttern, die auf einen Gewindeteil an einem Ende des Rohrteils aufgeschraubt werden. Solche Verbindungssysteme sind erzwungenermassen mehrteilig. Zudem wird zum Verbinden bzw. Lösen zweier Rohre in aller Regel ein Werkzeug benötigt. Beides ist unerwünscht, weil sich Herstellung und Montage damit verteuern. Es sind auch schon Steckverbindungen bekannt geworden, welche aber entweder keine zugfeste Verbindung sicherstellen oder dann nicht mehr lösbar sind. Ferner ist es bei herkömmlichen Verbindungen oft nicht möglich, die Rohre auf der Baustelle abzulängen, weil damit einerends die Verbindungsorgane wegfallen.

In CH 647 307 wird eine Rohrverbindung beschrieben, bei welcher Ausnehmungen eines Rohrs in Aussparungen eines nächsten Rohrs einrasten. Diese Verbindung ist durch Zug wieder zu lösen. Da sie jedoch auch eine minimale Zugfestigkeit aufweisen muss, ist das Lösen der Verbindung sehr kraftaufwendig.

Für verschiedene Anwendungen, aber insbesondere für Schutzrohre zum Einziehen elektrischer oder Lichtleiter-Kabel, ist es indessen erwünscht, einstückige Rohrteile ohne zusätzliche Bauteile zugfest und lösbar miteinander verbinden zu können, wobei die Rohrteile je nach Bedarf ablängbar sein sollen.

Die Lösung dieser Aufgabe wird durch die in den Ansprüchen definierten Merkmale erreicht. Damit wird eine einfach zu handhabende Steckverbindung geschaffen, welche nach dem Einrasten zugfest ist. Zum Lösen werden benachbarte Rohrteile geringfügig gegeneinander verdreht, wonach sie auseinander gezogen werden können. Dabei weisen die Schutzrohrteile keine beweglichen Elemente auf, sondern sind - bis auf allfällige Dichtungen - einstückig ausgebildet, was ihre Lagerhaltung und Montage wesentlich vereinfacht. Soll ein Rohrstück abgelängt werden, so lassen sich am Ende des abgelängten Rohrstücks die Verbindungsorgane als einfache Ausnehmungen in der Rohroberfläche anbringen.

Anhand der beiliegenden Zeichnungen soll dies im einzelnen an einem Ausführungsbeispiel näher erläutert werden. Es zeigen:
Figur 1 zwei Rohrstücke mit ihren entgegengesetzten Enden vor der Erstellung der Verbindung, in geschnittener Darstellung;
Figur 2 eine entsprechende Darstellung nach dem Zusammenfügen;
Figur 3 das mit Ausnehmungen versehene Rohrende, in perspektivischer Ansicht;
Figur 4 das mit einer Muffe versehene Rohrende, in Schnittansicht;
Figur 5 eine achsiale Aufsicht auf das mit einer Muffe versehene Rohrende;
Figur 6 eine Lehre zum Anbringen der Ausnehmungen am Rohrende, in Schnittansicht;
Figur 7 eine Frontansicht eines Werkzeuges, das mit der Lehre von Figur 6 zusammenwirkt, und
Figur 8 eine Seitenansicht dieses Werkzeugs.

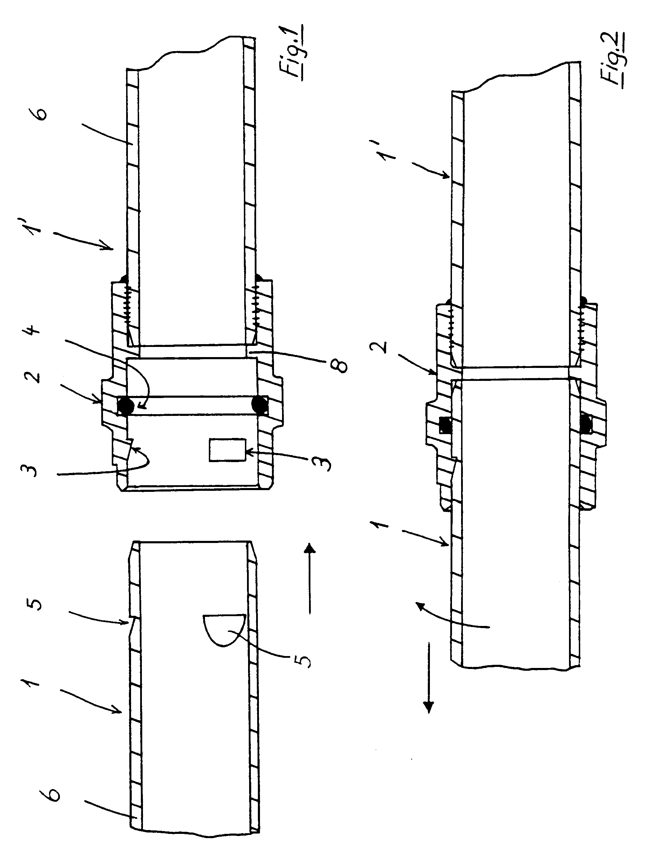

In den Figuren 1 und 2 sind jeweils die zur Verbindung gelangenden Enden zweier Rohrteile 1,1' gezeigt. Sie stellen aber ebenso die beiden unterschiedlichen Enden eines einzigen Rohrteils dar. Wie sich daraus ersehen lässt, besitzt jeder der Rohrteile 1,1' an seinem einen Ende eine Muffe 2. Die Muffe 2 besitzt an ihrem Innenumfang steckseitig mehrere Vorsprünge 3, die nach innen ragen. Rohrseitig schliesst daran ein O-Ring 4 als Dichtung an. An seinem anderen Ende ist jeder Rohrteil im wesentlichen bloss mit Ausnehmungen 5 versehen, die an der Rohraussenfläche entsprechend den Vorsprüngen 3 angeordnet sind.

Die Muffe 2 ist vorzugsweise als Kunststoffspritzteil ausgebildet und fest mit einem Rohrstück 6 verbunden, das in an sich beliebige Länge durch Extrusion aus Kunststoff hergestellt wird. Die Muffe ist, wie sich insbesondere aus den Figuren 1 und 2 ergibt, nicht stumpf mit dem Rohrstück 6 verschweisst, sondern umfasst dieses bis zu einem Anschlag 8. Die Verschweissung erfolgt an den aneinander anliegenden Flanken. Es entsteht damit kein innenliegender Schweissgrat, womit eine glatte Rohrinnenfläche erzielt wird.

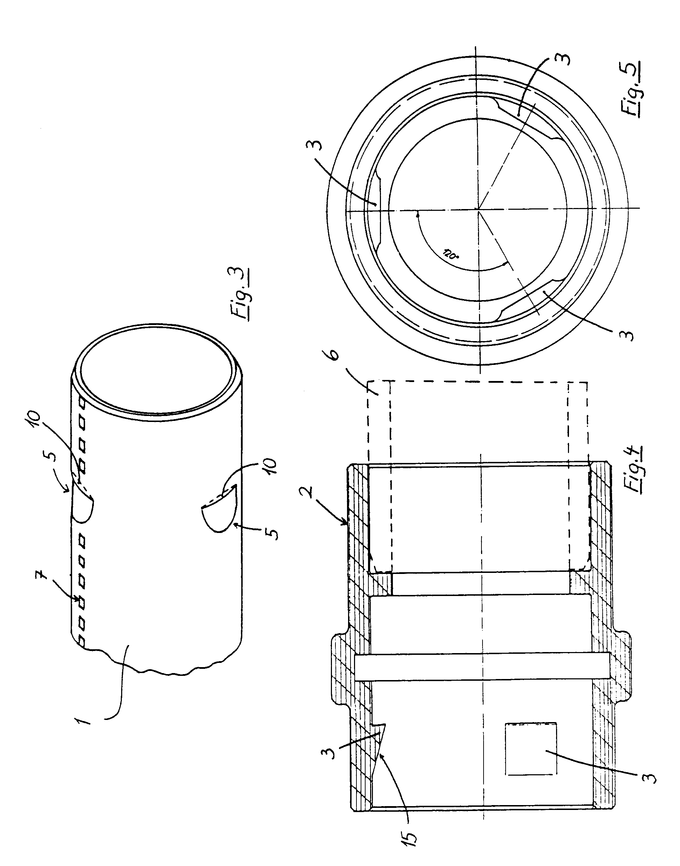

Zur gegenseitigen Verbindung werden zwei Rohrteile 1,1' mit gegeneinander ausgerichteten Verbindungsorganen 3, 5 ineinander geschoben, wofür an der Rohraussenseite Markierungen 7 (vergl. Figur 3) vorgesehen sind. Dazu wird das muffenlose Rohrende in die Muffe 2 eingeführt (vergl. Figur 2). Durch elastische Dehnung bzw. Stauchung der Rohrteile 1,1', gleiten die Vorspünge 3, die zu diesem Zweck mit Auflaufschräge 15 versehene Nasen bilden (Fig. 4), über die Aussenfläche des muffenlosen Endes und rasten elastisch in die Ausnehmungen 5 ein.

Damit ergibt sich eine längskraftschlüssige Verbindung zwischen den Rohrteilen 1,1', welche je nach Durchmesser und Anzahl Vorsprünge unterschiedlich hohe Zugkräfte aufnehmen kann.

Bei derart verbundenen Rohrteilen 1,1' ist die Rohrinnenfläche im Verbindungsbereich im wesentlichen glatt und ohne Vorsprünge (vergl. Figur 2), was das Einziehen und/oder Einblasen von Leitungen in das Schutzrohr erleichtert.

Soll die Verbindung zwischen den Rohrteilen 1,1' gelöst werden, so ist dazu einer der Rohrteile geringfügig um seine Achse zu drehen, wie mit Pfeil in Figur 2 angedeutet. Dabei ist ein gewisser Drehwiderstand zu überwinden, um die Vorsprünge 3 aus den Ausnehmungen auf den benachbarten Rohrumfang heraus zu heben. Dies stellt eine Sicherung gegen ungewolltes Lösen der Verbindung dar. Die Vorsprünge 3 bzw. Ausnehmungen 5 sind so bemessen, dass eine Drehung um einen Winkel von weniger als 30° zum Lösen ausreicht. Auch bei verlegten Rohren ist dies dank der Elastizität des Kunststoffs von Hand möglich. Es ist insbesondere auf die Figuren 3 bis 5 zu verweisen, aus denen sich die Anordnung der Vorsprünge 3 und der Ausnehmungen 5 im einzelnen ergibt. Im gezeigten Ausführungsbeispiel sind in Winkelabständen von 120 ° jeweils drei Ausnehmungen 5 bzw. Vorspünge 3 am Umfang angeordnet. Die Ausnehmungen 5 sind als Einschnitte an der Rohraussenfläche ausgebildet, die gegen das zugehörige Rohrende hin achsiale Anschläge 10 bilden. In Rohrumfangsrichtung gehen sie indessen stufenlos in die Rohraussenfläche über, so dass die Vorsprünge 5 bei Drehung eines Rohrteils in Umfangsrichtung aus den Einschnitten herausgleiten, und die Rohrteile dann auseinander gezogen werden können.

Dies ist deshalb ohne bewegliche Teile möglich, weil die Rohrteile in ausreichendem Masse elastisch dehn- bzw. stauchbar sind.

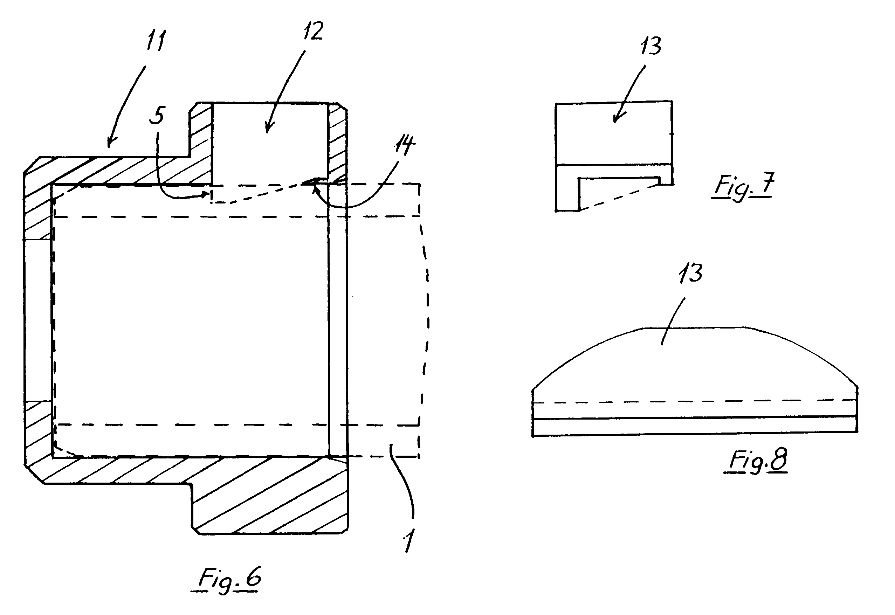

Bei werkseitig gelieferten Rohrteilen sind an beiden Enden die Verbindungsorgane bereits vorhanden. Die einstückigen Rohrteile 1,1' brauchen deshalb nur noch gemäss den Markierungen 7 ohne die Verwendung von Werkzeug zusammengesteckt zu werden. In der Praxis tritt aber bisweilen der Fall auf, dass ein werkseitig in Normlänge hergestellter Rohrteil gekürzt werden muss. Es ist nun gerade einer der Vorteile der vorliegenden Erfindung, dass auch bei derart abgelängten Rohrteilen die beschriebene Rohrverbindung ohne weiteres erstellt werden kann. Dazu wird der betreffende Rohrteil an seinem muffenlosen Ende auf die gewünschte Länge abgeschnitten. Danach brauchen am neuen Ende nur die Ausnehmungen 5 angebracht zu werden. Dies kann auf einfache Weise auf der Baustelle geschehen. In Figur 6 ist eine entsprechende Lehre 11 im Schnitt gezeigt. Diese wird auf das Rohrteilende aufgeschoben und bezüglich der Markierungen 7 positioniert. In der Lehre 11 sind Führungen 12 ausgebildet für ein Werkzeug 13 zum mechanischen Abtragen von Rohrmaterial. Dieses ist in Figur 7 in Frontansicht und in Figur 8 in Seitenansicht gezeigt. Die Führungen 12 verlaufen im wesentlichen tangential zum Rohrumfang, so dass das Messer 13 darin tangential geführt ist. Ferner ist in den Führungen 12 ein Anschlag 14 vorgesehen, der die korrekte Tiefe der Ausnehmung 5 gewährleistet. Auf diese Weise können auf der Baustelle in kürzester Zeit die Ausnehmungen 5 an der richtigen Stelle so angebracht werden, dass das Rohrteilende auf die bereits beschriebene Weise mit der Muffe eines damit zu verbindenen Rohrteils zusammenwirken kann.

Beim bisher beschriebenen Ausführungsbeispiel greifen die Rohrteile 1,1' in verbundenem Zustand ohne Längsspiel ineinander. Es kann nun erwünscht sein, die Verbindung so auszugestalten, dass sie eine Rohrdilatation aufzunehmen in der Lage ist. Zu diesen Zweck kann die Muffe 2 als Variante etwas länger ausgebildet werden, so dass sich das muffenlose Rohrende 1 etwas in die Muffe hinein verschieben kann, ohne dass indessen die zugfeste Verbindung aufgehoben wird. Eine bevorzugte Anwendung der beschriebenen Rohrteile ist ihre Verwendung als Schutzrohre für Uebermittungsleitungen bzw. Stromversorgung, die unterirdisch verlegt werden. Dasselbe System kann aber ebenso Anwendung finden für drucklose Kanalisationen und für Druckleitungen (Wasserversorgung) sowie für allgemeinen Leitungsbau.

## Patentansprüche

1. Rohr, dessen Enden zum zugfesten, trennbaren Verbinden mit entsprechenden, weiteren Rohren ausgebildet sind, wobei das eine Ende des Rohrs von einem Rohrstück (6) und das andere Ende von einem Muffenstück (2) gebildet wird, welches fest mit dem Rohrstück (6) verbunden und dazu ausgebildet ist, das Rohrstück (6) am Ende eines benachbarten Rohrs dichtend zu umgreifen, wobei das Muffenstück an seiner Innenseite mit Vorsprüngen (3) versehen ist und das Rohrstück an seiner Aussenfläche entsprechende Ausnehmungen (5) aufweist, die im Abstand vom betreffenden Rohrende derart ausgebildet sind, dass sie für die Vorsprünge (3) am Muffenstück (2) eines benachbarten Rohrs achsial zugfeste Anschläge bilden, dadurch gekennzeichnet, dass die Ausnehmungen (5) in der Umfangsrichtung im wesentlichen stufenlos in die Aussenfläche des Rohrstücks (6) übergehen, so dass die Vorsprünge zur Trennung der Rohre mittels relativer Drehung der beiden benachbarten Rohre aus den Ausnehmungen (5) lösbar sind.

2. Rohr nach Anspruch 1, dadurch gekennzeichnet, dass die Vorsprünge (3) und die Ausnehmungen (5) zur Bildung der Anschläge senkrecht zur Rohrstückachse verlaufende Anschlagflächen aufweisen.

3. Rohr nach einem der vorangehenden Ansprüche, dadurch gekennzeichnet, dass die Ausnehmungen (5) im wesentlichen als tangential zum Umfang des Rohrstücks angeordnete Einschnitte an dessen Aussenfläche ausgebildet sind, welche in Richtung auf das zugehörige Rohrende hin achsiale Anschläge (10) bilden, die jeweils von den Vorsprüngen (3) eines damit zu verbindenden, weiteren Rohrs hintergreifbar sind.

4. Rohr nach einem der vorangehenden Ansprüche, dadurch gekennzeichnet, dass jeder der Vorsprünge (3) als eine gegen das betreffende Rohrende hin mit einer Auflaufschräge (15) versehene Nase ausgebildet ist.

5. Rohr nach einem der vorangehenden Ansprüche, dadurch gekennzeichnet, dass es mindestens endseitig radial elastisch dehnbar ist, um eine Grösse, die etwa der Tiefe der Vorsprünge bzw. Ausnehmungen entspricht.

6. Rohr nach einem der vorangehenden Ansprüche, dadurch gekennzeichnet, dass das Muffenstück (2) als gespritzter Kunststoffteil und das Rohrstück (6) als extrudierter Kunststoffteil ausgebildet ist, wobei das Muffenstück (2) einerends fest mit dem Rohrstück (6) verbunden ist.

7. Rohr nach einem der vorangehenden Ansprüche, dadurch gekennzeichnet, dass das Muffenstück (2) an seiner Innenseite eine Ringnut zur Aufnahme einer Dichtung (4) aufweist, welche in Achsrichtung weiter vom entsprechenden Ende des Rohrs beabstandet ist als die Vorsprünge (3).

8. Rohr nach einem der vorangehenden Ansprüche, dadurch gekennzeichnet, dass die einerends vorgesehenen Ausnehmungen (5) an der Aussenseite des extrudierten Rohrstücks (6) jeweils durch zwei abgewinkelte, schräg zur Rohrachse verlaufende Flächen gebildet sind, von denen die eine den Anschlag bildet und die andere in flachem Winkel in die Aussenfläche des Rohrstücks einläuft.

9. Rohr nach einem der vorangehenden Ansprüche, dadurch gekennzeichnet, dass mindestens endseitig an der Aussenseite visuelle Markierungen (7) derart angeordnet sind, dass bei ausgerichteten Markierungen zweier zu verbindender Rohre deren Vorsprünge (3) bzw. Ausnehmungen aufeinander ausgerichtet sind.

10. Verfahren zum Herstellen der Ausnehmungen an einem Rohr nach einem der vorangehenden Ansprüche, dadurch gekennzeichnet, dass eine Lehre (11) verwendet wird, welche auf das muffenlose Ende des Rohrs aufgesetzt wird, wobei die Lehre Führungen (12) für ein Abtragswerkzeug (13) aufweist, welche bei der auf das Rohr aufgesetzten Lehre tangential zum Rohrumfang verlaufen, und dass die Ausnehmungen in der Aussenfläche des Rohrstücks in vorbestimmtem Abstand vom betreffenden Ende des Rohrs erzeugt werden, indem mit dem durch die Führungen (12) geführten Abtragungswerkzeug (13) mechanisch Rohrmaterial abgetragen wird.

## Claims

1. Pipe, the ends of which are designed for a tension-proof, releasable connection with corresponding further pipes, wherein one end of the pipe is formed by a pipe section (6) and the other by a socket section (2), which is tightly connected to the pipe section (6) and designed for sealingly embracing the tube section (6) at the end of a neighboring tube, wherein the socket section is provided at its inner side with projections (3) and the pipe section at its outer side comprises corresponding recesses (5), which are formed at a distance from the corresponding pipe end such that they form axially tension-proof abutments for the projections (3) on the socket section (2) of a neighboring pipe, characterized in that the recesses (5) circumferentially go over into the outer surface of the pipe section (6) substantially without a step such that for separation of the pipes the projections are releasable from the recesses (5) by relative rotation of the two neighboring pipes.

2. Pipe of claim 1 characterized in that the projections (3) and the recesses (5) comprise abutting surfaces extending perpendicular to the pipe section axis for forming the abutments.

3. Pipe of one of the preceding claims, characterized in that the recesses (5) are designed as cuts arranged substantially tangentially in respect the circumference of the pipe section at its outer surface, which cuts form axial abutments (10) in the direction of the corresponding pipe end, behind which the corresponding projections of a further pipe to be connected thereto can reach.

4. Pipe of one of the preceding claims, characterized in that each of the projections (3) is formed as a nose having a slanted butting face towards the corresponding pipe end.

5. Pipe of one of the preceding claims, characterized in that it is at least at its end-side radially elastically dilatable about a value that corresponds approximately to the depth of the projections or recesses, respectively.

6. Pipe of one of the preceding claims, characterized in that the socket section (2) is formed as a cast plastic piece and the pipe section as an extruded plastic piece, wherein the socket section (2) is tightly connected at its one end to the pipe section (6).

7. Pipe of one of the preceding claims, characterized in that the socket section (2) comprises a circular groove at its inner side for receiving a sealing (4) which is axially at a larger distance from the corresponding end of the pipe than the projections (3).

8. Pipe of one of the preceding claims, characterized in that the recesses (5) provided at the one end in the outer surface of the extruded pipe section (6) are each formed by two angled surfaces extending obliquely in respect to the pipe axis, a first of which is forming the abutment and the other running into the outer surface of the pipe section under a flat angle.

9. Pipe of one of the preceding claims, characterized in that at least at the end side on the outer side visual marks (7) are arranged such that upon alignment of the marks of two pipes to be connected to each other their projections (3) and recesses, respectively, are mutually aligned.

10. Method for producing the recesses on a pipe of one of the preceding claims characterized in that a gauge (11) is used which is put on to the socket-less end of the tube, wherein the gauge comprises guides (12) for a removal tool (13), which in the gauge put on the pipe are running tangentially to the pipe circumference, and that the recesses are created in the outer side of the pipe section at a predefined distance from the corresponding end of the pipe by mechanically removing pipe matter with the removal tool (3) guided by the guides (12).

## Revendications

1. Tuyau dont les extrémités sont agencées pour être réunies de manière détachable et résistant à la traction avec d'autres tuyaux similaires, une extrémité du tuyau étant formée par une section de tuyau (6) et l'autre par un manchon (2) fixé à la section de tuyau (6) et agencé pour encercler de façon étanche la section de tuyau (6) située à l'extrémité d'un tuyau voisin, le manchon comportant à son intérieur des protubérances (3) et la section de tuyau comportant des cavités (5) correspondantes situées à sa surface extérieure et formées à distance de l'extrémité correspondante du tuyau de façon à former des butées s'opposant à la traction en direction axiale pour les protubérances (3) du manchon (2) d'un tuyau voisin, caractérisé en ce qu'en direction périphérique les cavités (5) s'évasent de manière à venir progressivement se perdre dans la surface extérieure de la section de tuyau (6) pour permettre de désengager les protubérances des cavités (5) par rotation réciproque des deux tuyaux en vue de les séparer.

2. Tuyau selon la revendication 1, caractérisé en ce que les protubérances (3) et les cavités (5) comportent des surfaces de blocage orthogonales par rapport à l'axe du tuyau et destinées à servir de butoir.

3. Tuyau selon une des revendications précédentes, caractérisé en ce que les cavités (5) sont essentiellement formées par des encoches prévues à la surface extérieure de la section de tuyau et tangentiellement à sa circonférence, ces encoches formant en la direction axiale du tuyau dirigée vers son extrémité correspondante des butées (10) pouvant s'encliqueter avec les protubérances (3) d'un tuyau que l'on désire raccorder.

4. Tuyau selon une des revendications précédentes, caractérisé en ce que chaque protubérance (3) forme un coin présentant en direction de l'extrémité du tuyau une surface inclinée (15) de levage.

5. Tuyau selon une des revendications précédentes, caractérisé en ce qu'au moins à son extrémité il peut être élastiquement déformé en direction radiale d'une quantité correspondant essentiellement à la hauteur des protubérances, respectivement des cavités.

6. Tuyau selon une des revendications précédentes, caractérisé en ce que le manchon (2) est en plastique injecté et la section de tuyau (6) en plastique extrudé, une extrémité du manchon (2) étant fixement réunie à la section de tuyau (6).

7. Tuyau selon une des revendications précédentes, caractérisé en ce que le manchon (2) comporte à son intérieur une rainure annulaire destinée à maintenir un joint (4) et située à plus grande distance de l'extrémité correspondante du tuyau que les protubérances (3).

8. Tuyau selon une des revendications précédentes, caractérisé en ce que les cavités (5) prévues sur le côté extérieur à une extrémité de la section de tuyau (6) extrudé sont chacune formée par deux surfaces en biais, inclinées par rapport à l'axe du tuyau, dont l'une forme la butée tandis que l'autre rejoint en un angle très ouvert la surface extérieure de la section de tuyau.

9. Tuyau selon une des revendications précédentes, caractérisé en ce que des repères (7) sont disposés sur son extérieur, au moins près de ses extrémités, de façon à ce que lorsque les repères de deux tuyaux sont alignés leurs protubérances (3) et leurs cavités sont alignées les unes par rapport aux autres.

10. Procédé pour former les cavités sur un tuyau selon une des revendications précédentes, caractérisé en ce que l'on utilise un gabarit (11) que l'on dispose sur l'extrémité démunie de manchon d'un tuyau et comportant des guides (12) pour un outil d'usinage (13), ces guides étant orientés tangentiellement à la périphérie du tuyau lorsque le gabarit est disposé sur celui-ci, et que l'on creuse mécaniquement les cavités dans la surface extérieure de la section de tuyau, à une distance prédéterminée de son extrémité correspondante, au moyen de l'outil d'usinage (13) guidé par les guides (12).
